# EUROPÄISCHE PATENTSCHRIFT

(11) **EP 0 734 032 B1**
(45) Veröffentlichungstag und Bekanntmachung des Hinweises auf die Patenterteilung: **24.06.1998**
(21) Anmeldenummer: 96104360.1
(22) Anmeldetag: 19.03.1996
(51) Int. Cl.: H01G 4/236, H01G 4/38

(54) **Leistungskondensator**
Power capacitor
Condensateur de puissance

(30) Priorität: 20.03.1995 DE 29504732 U
(43) Veröffentlichungstag der Anmeldung: 25.09.1996
(73) Patentinhaber: Vishay Electronic GmbH, 95100 Selb (DE)
(72) Erfinder: Huber, Robert, 84056 Rottenburg (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- CH-A- 374 769
- US-A- 2 127 352
- US-A- 4 580 189

## Beschreibung

Die Erfindung betrifft einen Leistungskondensator nach dem Oberbegriff des Anspruchs 1 mit einem die Wickelelemente und ein Isoliermedium aufnehmenden metallischen Gehäuse sowie aus dem Gehäuseinneren über Durchführungen herausgeführten Kabelanschlüssen, wobei das Gehäuse als geschlossenes Gehäuse ausgebildet ist.

Ein derartiger Kondensator ist aus US-A-4 580 189 bekannt.

Bei bekannten Leistungskondensatoren mit geschlossenem Gehäuse werden üblicherweise zur Herausführung der elektrischen Anschlüsse Durchführungen verwendet, die bei öl- oder gasgefüllten Kondensatoren eine hermetische Abdichtung gewährleisten, das heißt dauerhaft gas- und öldicht sein müssen. Die im Regelfall aus Keramik bestehenden Durchführungen weisen im Bereich der Durchführung einen massiven, starren Leiter auf, da dies Voraussetzung für die Sicherstellung der geforderten Abdichtung ist. Solche Durchführungen sind sehr empfindlich gegen mechanische Belastungen und weisen nur eine geringe Elastizität auf, was vor allem beim Einsatz derartiger Kondensatoren in Fahrzeugen häufig zu Lecks und damit zur Unbrauchbarkeit des Kondensators führt. Die hermetisch abgedichteten Durchführungen sind überdies technisch aufwendig und teuer und erfordern eine sorgfältige Montage, das heißt entweder eine einwandfreie Verlötung in der Gehäusedeckwand oder eine Verklemmung bzw. Verspannung in der Gehäusedeckwand unter Zwischenschaltung zuverlässiger Dichtungen.

Aufgabe der Erfindung ist es, einen Leistungskondensator der eingangs angegebenen Art mit erhöhter mechanischer Belastbarkeit und gleichzeitiger Flexibilität der Anschlußelemente und damit einen Leistungskondensator von erhöhtem Gebrauchswert zu schaffen.

Gelöst wird diese Aufgabe nach der Erfindung gemäß Anspruch 1 dadurch,
daß die Kabelanschlüsse als isolierte Kabel ausgebildet sind, die innerhalb des Gehäuses über Verbindungsstellen mit den Wickelelementen verbunden sind,
daß das Isoliermedium aus einer Vergußmasse, insbesondere aus einer Gießharzfüllung besteht, in die die Verbindungsstellen eingegossen und damit vollständig eingebettet sind, und
daß die Durchführungen für die Kabelanschlüsse aus abgedichteten Kabeldurchlässen bestehen.

Durch die Verwendung einer Vergußmasse als Isoliermedium und die Verwendung isolierter Kabel, deren Verbindungsstellen mit den Wickelanschlüssen in die Vergußmasse verlagert sind, gelingt es, die Kabelanschlüsse ohne absolut gas- bzw. öldichte Durchführungen aus dem geschlossenen Gehäuse über einfache Verschraubungen herauszuführen und damit eine ganz wesentliche Vereinfachung des Aufbaus des Leistungskonaensators bezüglich herkömmlicher Leistungskondensatoren ohne jegliche technische Einbußen, sondern vielmehr unter gleichzeitiger Verbesserung der Eigenschaften zu erreichen.

Derartige Leistungskondensatoren nach der Erfindung eignen sich in Form von vergossenen, trockenen und selbstheilenden Kondensatoren insbesondere für den Einsatz in Bahnfahrzeugen.

Die aus leitendem oder nicht leitendem Material bestehenden einfachen Kabeldurchlässe sind bevorzugt in Form der bekannten Stopfbuchsenverschraubungen ausgeführt, an die keinerlei elektrische Anforderungen gestellt werden müssen, die aber sicherstellen, daß in das Gehäuse keine schädliche Feuchtigkeit eintreten kann. Diese Abdichtung gegen schädliche Feuchtigkeit stellt sicher, daß selbst dann keine negativen Effekte auftreten können, wenn sich die Gehäusewände gegebenenfalls einmal partiell vom Vergußblock ablösen sollten.

Der Innenraum des geschlossenen und damit eine besonders hohe Stabilität besitzenden Gehäuses ist gemäß einer bevorzugten Ausführungsform vollständig mit Gießharz vergossen, wobei das Vergußmedium ganz einfach und ohne besondere Zusatzaufwendungen eingefüllt werden kann, da kein optisch völlig einwandfreier Sichtverguß hergestellt werden muß, wie dies bei einer Konstruktion ohne Deckel erforderlich wäre. Durch die Verwendung eines geschlossenen Metallgehäuses mit abgedichteter Kabeldurchführung wird auch eine sehr große Unempfindlichkeit gegenüber mechanischen Schwingungsbeanspruchungen erzielt.

Durch den Verguß des innenliegenden Endes der isolierten Kabel, das heißt durch die Einbettung der Verbindungsstelle mit den Wickelanschlüssen in das Vergußmaterial wird auch eine Luft- und Feuchteabdichtung im Kabel zwischen Innenraum und Außenraum des Kondensators geschaffen, und es entfallen sowohl innere als auch äußere Verbindungsstellen an den Durchführungen, die generell ein Risiko in der Stromführung darstellen können. Da die Kabelanschlüsse in der erfindungsgemäßen Ausführungsform direkt und ohne freiliegende Verbindungsstellen nach außen geführt werden, werden diese Nachteile in vollem Umfange vermieden.

Durch die freie Wahl der Kabellänge und die Art der jeweils verwendeten Kabel isolierung ergibt sich ohne zusätzlichen Aufwand ein erhöhter Berührungsschutz, und es entfallen bisher erforderliche Rücksichtnahmen auf Luft- und Kriechstrecken.

Wenn der Gehäuseinnenraum vollständig mit Gießharz vergossen ist, wird in das Gießharz vorzugsweise ein Temperaturfühler eingebettet, dessen Anschlüsse über eine abgedichtete Verschraubung nach außen geführt werden können, wobei an die Verschraubung wiederum keine besonderen Anforderungen zu stellen sind.

Nach einer Ausgestaltung der Erfindung wird der Gehäuseinnenraum nur bis zu einem oberhalb der Wickelelemente und unterhalb der Deckwandung gelegenen Niveau mit Vergußmaterial gefüllt, das heißt es erfolgt eine unvollständige Füllung des Gehäuses mit Vergußmasse, und in diesem Falle kann der verbleibende Leerraum mit einer Überdrucküberwachung ausgerüstet werden, um eventuell kritische Druckanstiege erfassen zu können.

Ausführungsbeispiele der Erfindung werden nachfolgend unter Bezugnahme auf die Zeichnung erläutert; in der Zeichnung zeigt:
- Figur 1: eine schematische Darstellung eines Leistungskondensators mit Mehrfachanschluß im Vollverguß, und
- Figur 2: eine schematische Darstellung eines Leistungskondensators mit Mehrfachanschluß und Restvolumen für Drucküberwachung.

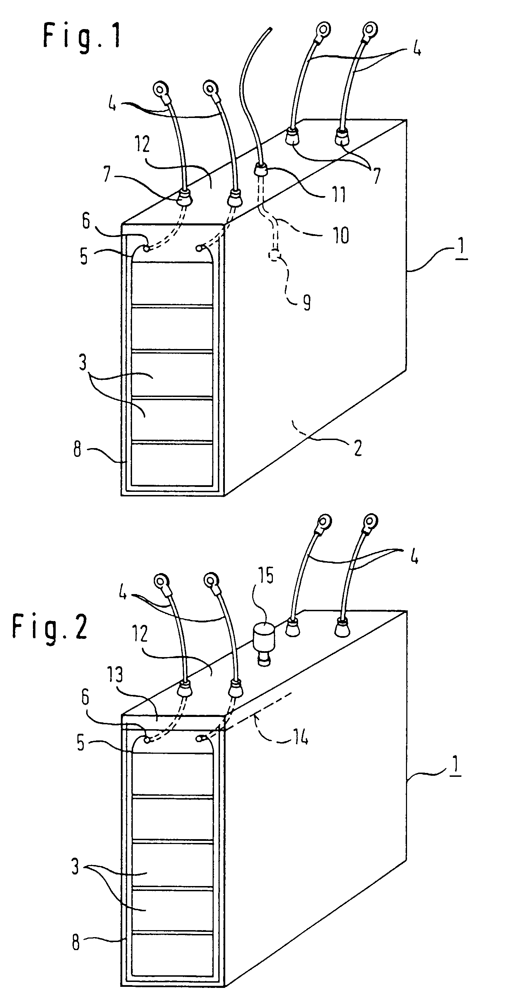

Figur 1 zeigt ein quaderförmiges metallisches Gehäuse 1 mit einem, beispielsweise mit einer Gießharzfüllung voll vergossenen Innenraum 2, in dem sich übereinander angeordnete Wickelelemente 3 befinden. Diese Wickelelemente 3 bestehen vorzugsweise aus trockenen und selbstheilenden Kondensatoren.

Die zusammengeführten elektrischen Anschlüsse 5 der Wickelelemente 3 sind an Verbindungsstellen 6 mit aus isolierten Kabeln bestehenden Kabelanschlüssen 4 verbunden. Zwischen dem Paket von Wickelelementen 3 und der Innenwandung des metallischen Gehäuses 1 ist üblicherweise eine Isolation 8 vorgesehen.

Da der Innenraum 2 voll vergossen ist, sind alle Verbindungsstellen 6 zwischen Wickelanschlüssen 5 und Kabelanschlüssen 4 hermetisch abgedichtet, und die Kabelenden sind außerdem in der vorzugsweise aus Gießharz bestehenden Vergußmasse durch das Eingießen gehaltert.

Die Herausführung der Kabelanschlüsse aus dem Innenraum des metallischen Gehäuses 1 erfolgt über einfache Kabeldurchlässe oder Kabelverschraubungen 7 mit Stopfbuchse, und die sich außerhalb des Gehäuses 1 befindende Länge der Kabelanschlüsse kann nach den jeweiligen Erfordernissen gewählt werden.

Zweckmäßigerweise wird in das Vergußmaterial ein Temperaturfühler 9 eingebracht, dessen Anschlußleitungen 10 wiederum nur über eine einfache Verschraubung 11 aus dem Gehäuse 1 herausgeführt werden können.

Figur 2 zeigt eine Ausführungsform, die sich von der Variante nach Figur 1 im wesentlichen nur dadurch unterscheidet, daß der Innenraum des Gehäuses 1 nicht voll vergossen, sondern unter Ausbildung eines deckelseitigen Leerraums 13 nur unvollständig befüllt ist. Auch bei dieser Ausführungsform muß jedoch sichergestellt werden, daß die Verbindungsstellen 6 zwischen den Kabelanschlüssen 4 und den Wickelanschlüssen 5 im Vergußmaterial eingebettet und dabei diese Verbindungsstellen so gelegen sind, daß sich auch eine sichere Verankerung der Kabelanschlüsse 4 in der Vergußmasse ergibt.

Der Leerraum 13 ist mit einer Überdrucküberwachung ausgestattet, und zu diesem Zweck ist in der Deckwand 12 des Gehäuses 1 ein Druckwächter 15 gehaltert. Auf diese Weise kann ein eventueller kritischer Druckanstieg erfaßt werden.

Im Zusammenhang mit der Abdichtung der Kabeldurchlässe kommen neben der Verwendung von Kabeldurchlässen oder Kabelverschraubungen auch Quetsch- oder Vergußlösungen in Betracht.

## Patentansprüche

1. Leistungskondensator mit einem die Wickelelemente (3) und ein Isoliermedium aufnehmenden metallischen Gehäuse (1) sowie aus dem Gehäuseinneren (2) über Durchführungen herausgeführten Kabelanschlüssen (4), wobei das Gehäuse (1) als geschlossenes Gehäuse ausgebildet ist,
**dadurch gekennzeichnet** ,
daß die Kabelanschlüsse (4) als isolierte Kabel ausgebildet sind, die innerhalb des Gehäuses (1) über Verbindungsstellen (6) mit den Wickelelementen (3) verbunden sind,
daß das Isoliermedium aus einer Vergußmasse, insbesondere aus einer Gießharzfüllung besteht, in die die Verbindungsstellen (6) eingegossen und damit vollständig eingebettet sind, und
daß die Durchführungen für die Kabelanschlüsse (4) aus abgedichteten Kabeldurchlässen (7) bestehen.

2. Leistungskondensator nach Anspruch 1,
**dadurch gekennzeichnet,**
daß die aus leitendem oder nicht leitendem Material bestehenden Kabeldurchlässe (7) in Form von Stopfbuchsenverschraubungen ausgeführt sind.

3. Leistungskondensator nach Anspruch 1 oder 2,
**dadurch gekennzeichnet,**
daß der Gehäuseinnenraum (2) vollständig mit Gießharz vergossen und in das Gießharz ein Temperaturfühler (9) eingebettet ist, dessen Anschlüsse (10) über einen abgedichteten Durchlaß (11) nach außen geführt sind.

4. Leistungskondensator nach einem der vorhergehenden Ansprüche,
**dadurch gekennzeichnet,**
daß der Gehäuseinnenraum (2) nur bis zu einem oberhalb der Wickelelemente (3) und unterhalb der Deckwandung (12) gelegenen Niveau (14) mit Vergußmaterial befüllt und der vorhandene Leerraum (13) mit einer Überdrucküberwachung ausgerüstet ist.

5. Leistungskondensator nach Anspruch 4,
**dadurch gekennzeichnet,**
daß zur Überdrucküberwachung ein in der Gehäusewandung, insbesondere in der Deckwandung (12) gehalterter Druckwächter (15) vorgesehen ist.

6. Leistungskondensator nach einem der vorhergehenden Ansprüche,
**dadurch gekennzeichnet,**
daß die Kondensatorwickel (3) aus trockenen und selbstheilenden Kondensatoren bestehen.

7. Leistungskondensator nach einem der vorhergehenden Ansprüche,
**dadurch gekennzeichnet,**
daß die Kabeldurchlässe (7) durch einen Quetsch- oder Vergußabschluß abgedichtet sind.

## Claims

1. Power capacitor comprising a metallic housing (1) which receives the wound elements (3) and an insulating medium and also cable connections (4) which are led out of the interior of the housing (2) via through-guides, wherein the housing (1) is formed as a closed housing, characterized in that the cable connections (4) are formed as insulated cables, which are connected inside the housing (1) via connection joints (6) to the wound elements (3), in that the insulating medium comprises a potting composition, in particular of a filling of a potting resin, in which the connection joints (6) are potted and thus fully embedded; and in that the through-guides for the cable connections (4) consist of sealed cable bushings (7).

2. Power capacitor in accordance with claim 1, characterized in that the cable bushings (7) consisting of conductive or non-conductive material are executed in the form of screw-threaded stuffing boxes.

3. Power capacitor in accordance with claim 1 or claim 2, characterized in that the interior space (2) of the housing is fully potted with potting resin and a temperature sensor (9) is embedded into the potting resin and its connections (10) are led outwardly via a sealed bushing (11).

4. Power capacitor in accordance with one of the preceding claims, characterized in that the interior space (2) of the housing is only filled with potting material to a level (14) lying above the wound elements (3) and below the cover wall (12) and in that the empty space (13) which is present is equipped with an excess pressure monitoring device.

5. Power capacitor in accordance with claim 4, characterized in that a pressure monitor (15) held in the housing wall, in particular in the cover wall (12), is provided for the excess pressure monitoring.

6. Power capacitor in accordance with one of the preceding claims, characterized in that the capacitor windings (3) comprise dry and self-healing capacitors.

7. Power capacitor in accordance with one of the preceding claims, characterized in that the cable bushings (7) are sealed off by a crimped or potted closure.

## Revendications

1. Condensateur de puissance comportant un boîtier métallique (1) logeant les éléments de bobinage (3) et un milieu isolant ainsi que des connexions câblées (4) sortant de l'intérieur (2) du boîtier par des passages de câbles, le boîtier (1) étant conçu en tant que boîtier fermé,
caractérisé
en ce que les connexions câblées (4) sont formées de câbles isolés qui sont reliés aux éléments de bobinage à l'intérieur du boîtier (1) par des points de jonction (6),
en ce que le milieu isolant se compose d'une masse de remplissage, en particulier d'une résine de garnissage dans laquelle les points de jonction (6) sont coulés et ainsi complètement enrobés et
en ce que les passages de câbles réservés aux connexions câblées (4) sont constitués de passe-câbles étanches (7).

2. Condensateur de puissance selon la revendication 1, caractérisé
en ce que les passe-câbles (7) composés de matériau conducteur ou non conducteur sont réalisés sous forme de raccords à vis formant presse-étoupe.

3. Condensateur de puissance selon la revendication 1 ou 2, caractérisé
en ce que l'intérieur du boîtier (2) est complètement rempli de résine de garnissage et dans la résine de garnissage est noyé un capteur de température (9) dont les connexions (10) sont amenées vers l'extérieur par le biais d'un passe-câble étanche (11).

4. Condensateur de puissance selon l'une quelconque des revendications précédentes, caractérisé
en ce que l'intérieur du boîtier (2) n'est rempli de matériau de remplissage que jusqu'à un niveau (14) situé au-dessus des éléments de bobinage (3) et au-dessous de la paroi supérieure (12) et l'espace vide présent (13) est équipé d'un contrôleur de surpression.

5. Condensateur de puissance selon la revendication 4, caractérisé
en ce qu'il est prévu pour contrôler les surpressions un pressostat (15) fixé dans la paroi du boîtier, en particulier dans la paroi supérieure (12).

6. Condensateur de puissance selon l'une quelconque des revendications précédentes, caractérisé
en ce que les bobinages de condensateur (3) se composent de condensateurs secs et autogénérateurs.

7. Condensateur de puissance selon l'une quelconque des revendications précédentes, caractérisé
en ce que les passe-câbles (7) sont rendus étanches par une fermeture de scellement ou à sertir.
